# EUROPÄISCHE PATENTSCHRIFT

(11) **EP 1 456 267 B1**
(45) Veröffentlichungstag und Bekanntmachung des Hinweises auf die Patenterteilung: **15.02.2012**
(21) Anmeldenummer: 02781341.9
(22) Anmeldetag: 06.12.2002
(51) Int. Cl.: C08G 18/22, C08G 18/12, C08G 18/08, C08G 18/66, C08G 18/72

(54) **WAESSRIGE POLYURETHAN-DISPERSIONEN, ERHAELTLICH MIT HILFE VON CAESIUMSALZEN**
AQUEOUS POLYURETHANE DISPERSIONS OBTAINED BY THE USE OF CESIUM SALTS
DISPERSIONS AQUEUSES DE POLYURETHANNE OBTENUES AU MOYEN DE SELS DE CESIUM

(30) Priorität: 12.12.2001 DE 10161156
(43) Veröffentlichungstag der Anmeldung: 15.09.2004
(73) Patentinhaber: BASF SE, 67056 Ludwigshafen (DE)
(72) Erfinder: BRUCHMANN, Bernd, 67251 Freinsheim (DE); HÄBERLE, Karl, 67346 Speyer (DE); HÖRNER, Klaus Dieter, 68623 Lampertheim (DE); TREIBER, Reinhard, 69181 Leimen (DE); RENZ, Thomas, 67061 Ludwigshafen (DE); SEYFFER, Hermann, 69123 Heidelberg (DE); MEYER, Bärbel, 02991 Lauta (DE); WOLF, Lothar, 02991 Torno (DE); KNOCHEL, Paul, 81377 München (DE)
(86) Internationale Anmeldenummer: PCT/EP2002/013841
(87) Internationale Veröffentlichungsnummer: WO 2003/050156

(56) Entgegenhaltungen:
- EP-A- 0 647 667
- DE-A- 1 720 639
- DE-A- 2 035 732
- DE-A- 19 959 653
- US-A- 5 264 572

## Beschreibung

Die vorliegende Erfindung betrifft wässrige Dispersionen, enthaltend ein Polyurethan, aufgebaut aus
a) Diisocyanaten,
b) Diolen, von denen
   b₁) 10 bis 100 mol-%, bezogen auf die Gesamtmenge der Diole (b), ein Molekulargewicht von 500 bis 5000 aufweisen, und
   b₂) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt,
erhältlich durch Umsetzung der Monomere a), b), c) sowie gegebenenfalls d), und e) in Anwesenheit eines Cäsiumsalzes.

Weiterhin betrifft die Erfindung Verfahren zur Beschichtung, Verklebung und Imprägnierung von Gegenständen aus unterschiedlichen Materialien mit diesen Dispersionen, die mit diesen Dispersionen beschichteten, verklebten und imprägnierten Gegenstände, sowie die Verwendung der erfindungsgemäßen Dispersionen als hydrolysefeste Beschichtungsmaterialien.

Die Verwendung von wässerigen Dispersionen, die Polyurethane enthalten (kurz: PUR-Dispersionen) zur Beschichtung von Substraten wie Textil oder Leder ist seit langem bekannt (EP-A 595149).

Bei der Herstellung wässriger Polyurethan-Dispersionen (nachfolgend auch PUR-Dispersionen genannt) wird die Additionsreaktion, d.h. die Umsetzung der einzelnen Monomere untereinander, häufig unter Verwendung von Katalysatoren durchgeführt. Hierbei haben sich insbesondere organische Verbindungen des Zinns wie zum Beispiel Dibutylzinndilaurat gut bewährt (DE-A 19959653). Es ist jedoch bekannt, dass derartige organische Verbindungen des Zinns u.a. eine hohe Toxizität aufweisen und sich wegen ihrer schlechten Abbaubarkeit in unerwünschter Weise in der Umwelt anreichern. Die üblicherweise verwendeten Diorganylverbindungen des Zinns sind zwar weniger gefährlich als die sogenannten Triorganylverbindungen des Zinns, jedoch enthalten käufliche Präparate von Diorganylverbindungen des Zinns aufgrund der speziellen Herstellung stets auch gewisse Anteile an Triorganylverbindungen des Zinns.

Die DE-A 19917897 beschreibt ein Verfahren zur Herstellung von Polyurethan-Schäumen aus speziellen Polyetherolen unter Verwendung von Metallsalz-Katalysatoren. Sie nennt Salze, die aus Metallen der ersten und zweiten Hauptgruppe sowie eine Vielzahl von Anionen bestehen. Besonders bevorzugt werden Kaliumsalze verwendet. Aus dieser Offenlegungsschrift ist aber nicht bekannt, derartige Katalysatoren zur Herstellung von Polyurethan-Dispersionen zu verwenden.

Weiterhin ist aus der älteren Anmeldung DE-A 10133789 bekannt, Polyurethan-Dispersionen in der Weise herzustellen, dass man die Additionsreaktion auch ohne Mitverwendung eines Katalysators durchführt. Hierbei müssen jedoch u.a. längere Reaktionszeiten sowie gegebenenfalls höhere Temperaturen in Kauf genommen werden.

Der vorliegenden Erfindung lag daher die Aufgabe zugrunde, den geschilderten Nachteilen abzuhelfen und verbesserte PUR-Dispersionen zu entwickeln, welche unter Mitverwendung nicht toxischer Katalysatoren erhalten werden, wobei die eingesetzten Katalysatoren weitgehend nur die Bildung des Urethans katalysieren sollen. Weiterhin sollen bei der Herstellung der Polyurethan-Dispersionen die eingesetzten Katalysatoren keine der zahlreichen weiteren Reaktionen, zu denen Isocyanatgruppen befähigt sind, wie zum Beispiel die Bildung von Allophanaten, Isocyanuraten oder Carbodiimide katalysieren, da dies nur zu unerwünschten Verzweigungen der Polyurethankette führen würde.

Demgemäß wurden die eingangs definierten wäßrigen Dispersionen sowie ein Verfahren zu deren Herstellung gefunden. Weiterhin wurde ein Verfahren zur Herstellung von Beschichtungen, Verklebungen und Imprägnierungen entwickelt. Weiterhin erstreckt sich die vorliegende Erfindung auch auf die so beschichteten, verklebten und beschichteten Gegenstände und deren Verwendung als hydrolysefeste Beschichtung.

Die erfindungsgemäßen wässrigen Dispersionen enthalten Polyurethane, welche neben anderen Monomeren aus Diisocyanaten a) abgeleitet sind, wobei vorzugsweise solche Diisocyanate a) verwendet werden, die üblicherweise in der Polyurethanchemie eingesetzt werden.

Insbesondere zu nennen sind als Monomere (a) Diisocyanate X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat (HDI), Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/ cis- und das cis/trans-Isomere sowie aus diesen Verbindungen bestehende Gemische.

Derartige Diisocyanate sind im Handel erhältlich.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4 Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Zum Aufbau der Polyurethane kann man als Verbindungen außer den vorgenannten auch Isocyanate einsetzen, die neben den freien Isocyanatgruppen weitere verkappte Isocyanatgruppen, z.B. Uretdiongruppen tragen.

Im Hinblick auf gute Filmbildung und Elastizität kommen als Diole (b) vornehmlich höhermolekulare Diole (b1) in Betracht, die ein Molekulargewicht von etwa 500 bis 5000, vorzugsweise von etwa 1000 bis 3000 g/mol haben.

Bei den Diolen (b1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12- diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, γ-Butyrolacton und/oder Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich. Besonders bevorzugt ist Polytetrahydrofuran eines Molekulargewichts von 240 bis 5000, und vor allem 500 bis 4500. Daneben können auch Mischungen aus Polyesterdiolen und Polyetherdiolen als Monomere (b1) eingesetzt werden.

Ebenfalls geeignet sind Polyhydroxyolefine, bevorzugt solche mit 2 endständigen Hydroxylgruppen, z.B. α,ω-Dihydroxypolybutadien, α,ω-Dihydroxypolymethacrylester oder α,ω-Dihydroxypolyacrylester als Monomere (c1). Solche Verbindungen sind beispielsweise aus der EP-A 0622378 bekannt. Weitere geeignete Polyole sind Polyacetale, Polysiloxane und Alkydharze.

Die Polyole können auch als Gemische im Verhältnis 0,1 : 1 bis 1 : 9 eingesetzt werden.

Die Härte und der Elastizitätsmodul der Polyurethane lassen sich erhöhen, wenn als Diole (b) neben den Diolen (b1) noch niedermolekulare Diole (b2) mit einem Molekulargewicht von etwa 60 bis 500, vorzugsweise von 62 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, wobei Diole mit 2 bis 12 C-Atomen, unverzweigte Diole mit 2 bis 12 C-Atomen und einer gradzahligen Anzahl von C-Atomen sowie Pentan-1,5-diol und Neopentylglykol bevorzugt werden.

Bevorzugt beträgt der Anteil der Diole (b1), bezogen auf die Gesamtmenge der Diole (b) 10 bis 100 mol-% und der Anteil der Monomere (b2), bezogen auf die Gesamtmenge der Diole (b) 0 bis 90 mol-%. Besonders bevorzugt beträgt das Verhältnis der Diole (b1) zu den Monomeren (b2) 0,1 : 1 bis 5:1, besonders bevorzugt 0,2 : 1 bis 2 : 1.

Um die Wasserdispergierbarkeit der Polyurethane zu erreichen, sind die Polyurethane neben den Komponenten (a), (b) und gegebenenfalls (d) aus von den Komponenten (a), (b) und (d) verschiedenen Monomeren (c), die wenigstens eine Isocyanatgruppe oder wenigstens eine gegenüber Isocyanatgruppen reaktive Gruppe und darüberhinaus wenigstens eine hydrophile Gruppe oder eine Gruppe, die sich in eine hydrophile Gruppe überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Der Anteil der Komponenten mit (potentiell) hydrophilen Gruppen an der Gesamtmenge der Komponenten (a), (b), (c), (d) und (e) wird im allgemeinen so bemessen, daß die Molmenge der (potentiell) hydrophilen Gruppen, bezogen auf die Gewichtsmenge aller Monomere (a) bis (e), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (e).

Bevorzugte Monomere mit nichtionischen hydrophilen Gruppen sind Polyethylenoxiddiole, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US-A 3 905 929 und US-A 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen oder tertiäre Aminogruppen.

(Potentiell) ionische Monomere (c) sind z.B. in Ullmanns Encyklopädie der technischen Chemie, 4. Auflage, Band 19, S. 311-313 und beispielsweise in der DE-A 1 495 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁- bis C₆-Alkylhalogeniden oder Benzylhalogeniden, z.B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel (c₁) 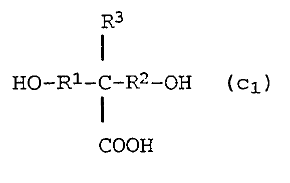 in welcher R¹ und R² für eine C₁- bis C₄-Alkandiyl-Einheit und R³ für eine C₁- bis C₄-Alkyl-Einheit steht und vor allem Dimethylolpropionsäure (DMPA) bevorzugt.

Weiterhin eignen sich entsprechende Dihydrox-ysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Als Monomere (c) mit gegenüber Isocyanaten reaktiven Aminogruppen kommen Aminocarbonsäuren wie Lysin, β-Alanin oder die in der DE-A 2034479 genannten Addukte von aliphatischen diprimären Diaminen an a,β-ungesättigte Carbon- oder Sulfonsäuren in Betracht.

Solche Verbindungen gehorchen beispielsweise der Formel (c₂)

H₂N-R⁴-NH-R⁵-X (c₂)

in der
- R⁴ und R⁵ unabhängig voneinander für eine C₁- bis C₆-Alkandiyl-Einheit, bevorzugt Ethylen
und X für COOH oder SO₃H stehen.

Besonders bevorzugte Verbindungen der Formel (c₂) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist.

Weiterhin bevorzugt sind die Addukte der oben genannten aliphatischen diprimären Diamine an 2-Acrylamido-2-methylpropansulfonsäure, wie sie z.B. in der DE Patentschrift 1 954 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Sulfonat- oder Carboxylatgruppen in Form ihrer Salze mit einem Alkaliion oder einem Ammoniumion als Gegenion vor.

Die Monomere (d), die von den Monomeren (a) bis (c) verschieden sind und welche gegebenenfalls auch Bestandteile des Polyurethans sind, dienen im allgemeinen der Vernetzung oder der Kettenverlängerung. Es sind im allgemeinen mehr als zweiwertige nichtphenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen.

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Ferner kommen Monoalkohole in Betracht, die neben der HydroxylGruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, daß man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-A 1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge der Komponenten (b) und (d) eines Polyamins mit mindestens 2 gegenüber Isocyanaten reaktiven Aminogruppen als Monomere (d).

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Für den gleichen Zweck können auch als Monomere (d) höher als zweiwertige Isocyanate eingesetzt werden. Handelsübliche Verbindungen sind beispielsweise das Isocyanurat oder das Biuret des Hexamethylendiisocyanats.

Monomere (e), die gegebenenfalls mitverwendet werden, sind Monoisocyanate, Monoalkohole und monoprimäre und -sekundäre Amine. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α,α-dimethylbenzylisocyanat (TMI) und Ester von Acryl- oder Methacrylsäure wie Hydroxyethylacrylat oder Hydroxyethylmethacrylat.

Überzüge mit einem besonders guten Eigenschaftsprofil erhält man vor allem dann, wenn als Monomere (a) im wesentlichen nur aliphatische Diisocyanate, cycloaliphatische Diisocyanate oder TMXDI und als Monomer (b1) im wesentlichen nur Polyesterdiole, aufgebaut aus den genannten aliphatischen Diolen und Disäuren, eingesetzt werden.

Diese Monomerkombination wird in hervorragender Weise ergänzt als Komponente (c) durch Diaminosäure-Salze; ganz besonders durch die N-(2-Aminoethyl)-2-aminoethansulfonsäure, die N-(2-Aminoethyl)-2-aminoethancarbonsäure bzw. ihre entsprechenden Alkalisalze, wobei die Na-Salze am besten geeignet sind, und eine Mischung von DETA/IPDA als Komponente (d).

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a) bis (e) sowie ihre jeweiligen Molmengen so gewählt, daß das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können
0,5 : 1 bis 2:1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (e) zur Herstellung des im den erfindungsgemäßen wässrigen Dispersionen vorliegenden Polyurethans kann bei Reaktionstemperaturen von 20 bis 180°C, bevorzugt 70 bis 150°C unter Normaldruck oder unter autogenem Druck erfolgen.

Die erforderlichen Reaktionszeiten liegen üblicherweise im Bereich von 1 bis 20 Stunden, insbesondere im Bereich von 1,5 bis 10 Stunden. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Die Polyaddition der Monomere a), b), c) sowie gegebenenfalls d) und e) zur Herstellung der erfindungsgemäßen PUR-Dispersion erfolgt in Anwesenheit eines Cäsiumsalzes. Bevorzugte Cäsiumsalze sind dabei Verbindungen, in denen folgende Anionen eingesetzt werden: F-, Cl-, ClO-, ClO₃-, ClO₄-, Br-, J-, JO₃-, CN-, OCN-, NO₂-, NO₃-, HCO₃-, CO₃²-, S²⁻, SH⁻, HSO₃⁻, SO₃²⁻, HSO₄⁻, SO₄²⁻, S₂O₂²⁻, 5₂0₄²-. S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)-, (CₙH₂ₙ₋₃O₂)⁻ sowie (Cₙ₊₁H₂ₙ₋₂O₄)²⁻, wobei n für die Zahlen 1 bis 20 steht.

Besonders bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Ganz besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Die Cäsiumsalze werden in Mengen von 0,01 bis 10 mmol Cäsiumsalz pro kg lösungsmittelfreier Ansatz eingesetzt. Bevorzugt werden sie in Mengen von 0,05 bis 2 mmol Cäsiumsalz pro kg lösungsmittelfreier Ansatz verwendet.

Die Cäsiumsalze können dem Ansatz in fester Form, bevorzugt jedoch in gelöster Form zugesetzt werden. Als Lösemittel sind polare, aprotische Lösemittel oder auch protische Lösemittel geeignet. Besonders geeignet sind neben Wasser auch Alkohole; ganz besonders geeignet sind Polyole, wie sie auch sonst als Bausteine für Polyurethane verwendet werden, wie z.B. Ethan-, Propan- und Butandiole. Die Verwendung der Cäsiumsalze erlaubt es, die Polyaddition unter den üblichen Bedingungen zu führen.

Als Polymerisationsapparate zur Durchführung der Polyaddition kommen Rührkessel in Betracht, insbesondere dann, wenn durch Mitverwendung von Lösungsmitteln für eine niedrige Viskosität und eine gute Wärmeabfuhr gesorgt ist.

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.

Meistens werden die Dispersionen nach einem der folgenden Verfahren hergestellt:
Nach dem "Acetonverfahren" wird in einem mit Wasser mischbaren und bei Normaldruck unter 100°C siedenden Lösungsmittel aus den Komponenten (a) bis (c) ein ionisches Polyurethan hergestellt. Es wird soviel Wasser zugegeben, bis sich eine Dispersion bildet, in der Wasser die kohärente Phase darstellt.

Das "Prepolymer-Mischverfahren" unterscheidet sich vom Acetonverfahren darin, daß nicht ein ausreagiertes (potentiell) ionisches Polyurethan, sondern zunächst ein Prepolymer hergestellt wird, das Isocyanat-Gruppen trägt. Die Komponenten werden hierbei so gewählt, daß das definitionsgemäße Verhältnis A:B größer 1,0 bis 3, bevorzugt 1,05 bis 1,5 beträgt. Das Prepolymer wird zuerst in Wasser dispergiert und anschließend gegebenenfalls durch Reaktion der Isocyanat-Gruppen mit Aminen, die mehr als 2 gegenüber Isocyanaten reaktive Aminogruppen tragen, vernetzt oder mit Aminen, die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Aminogruppen hydrolysiert, die mit noch verbliebenen Isocyanatgruppen der Prepolymere unter Kettenverlängerung abreagieren.

Üblicherweise wird, falls bei der Herstellung des Polyurethans ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% auf und sind besonders bevorzugt frei von Lösungsmitteln.

Die Dispersionen haben im allgemeinen einen Feststoffgehalt von 10 bis 75, bevorzugt von 20 bis 65 Gew.-% und eine Viskosität von 10 bis 500 m Pas (gemessen bei einer Temperatur von 20°C und einer Schergeschwindigkeit von 250 s⁻¹).

Hydrophobe Hilfsmittel, die unter Umständen nur schwierig homogen in der fertigen Dispersion zu verteilen sind wie beispielsweise Phenol-Kondensationsharze aus Aldehyden und Phenol bzw. Phenolderivaten oder Epoxidharze und weitere z.B. in der DE-A 3903538, 43 09 079 und 40 24 567 genannten Polymere, die in Polyurethan-dispersionen beispielsweise als Haftungsverbesserer dienen, können nach den in den beiden oben genannten Schriften beschriebenen Methoden dem Polyurethan oder dem Prepolymeren bereits vor der Dispergierung zugesetzt werden.

Die Polyurethan-Dispersionen können handelsübliche Hilfs- und Zusatzstoffe wie Treibmittel, Entschäumer, Emulgatoren, Verdikkungsmittel und Thixotropiermittel, Farbmittel wie Farbstoffe und Pigmente enthalten.

Die erfindungsgemäßen Dispersionen eignen sich zur Beschichtung von Gegenständen aus Metall, Kunststoff, Papier, Textil, Leder oder Holz, indem man sie nach den allgemein üblichen Verfahren, also z.B. durch Sprühen oder Rakeln in Form eines Films auf diese Gegenstände aufträgt und die Dispersion trocknet.

Insbesondere sind die Dispersionen zur Beschichtung von Gegenständen aus Kunststoff, Papier, Textil oder Leder geeignet, wenn man zuvor die Dispersion nach bekannten Verfahren zu einem Schaum aufschlägt und mit diesem beschichtet.

Die wässrigen Dispersionen eignen sich vor allem für die Herstellung von Zubereitungen, wie sie in der DE-A 19 605 311 beschrieben sind. Diese Zubereitungen werden nach der Lehre der DE-A 19 605 311 für die Beschichtung von Textilien oder Vliesen eingesetzt. Diese Materialien werden durch diese Behandlung flammfest, wasserdicht gegenüber flüssigem Wasser und wasserdampfdurchlässig.

Zur Herstellung der beschichteten Textilien oder Vliese werden die erfindungsgemäßen wässerigen Dispersionen nach üblichen Verfahren auf die textilen Trägermaterialien aufgetragen, z.B. durch rakeln oder streichen und das beschichtete Trägermaterial anschließend getrocknet.

Bevorzugt wird dabei auf folgende Weise vorgegangen:
Die wässerige Dispersion wird in Schaumform auf das Trägermaterial aufgetragen, da dadurch die Dampfdurchlässigkeit erheblich verbessert wird. Hierzu wird die Dispersion nach Zusatz des Schaumstabilisators und gegebenenfalls von Verdickungsmittel und weiterer Zusatzstoffe wie Flammschutzmitteln mechanisch aufgeschäumt. Dies kann in einem Schaummixgerät unter Eintrag hoher Scherkräfte erfolgen. Eine weitere Möglichkeit besteht darin, in einem Schaumgenerator durch Einblasen von Druckluft aufzuschäumen. Vorzugsweise wird mittels eines Schaumgenerators aufgeschäumt.

Das geschäumte Beschichtungsmittel wird dann mit üblichen Beschichtungseinrichtungen, beispielsweise einem Streichrakel oder anderen Schaumauftragungsgeräten, auf das Trägermaterial aufgetragen. Die Auftragung kann ein- oder beidseitig erfolgen; vorzugsweise erfolgt sie einseitig. Die Auftragungsmenge pro Seite beträgt von 20 bis 150 g/m², insbesondere 50 bis 90 g/m².

Bei Mengen unterhalb 20 g/m² erhält man zwar guten Dampfdurchlaß bei niedrigen Kosten, aber schlechte Wasserdichtigkeit. Bei Mengen oberhalb 150 g/m² treten beim Trocknen Rißbildungen auf.

Gegenstände aus Metall, Kunststoff, Papier, Leder oder Holz lassen sich ebenfalls mit anderen Gegenständen, vorzugsweise den vorgenannten Gegenständen, verkleben, indem man die erfindungsgemäße wässerige Dispersion in Form eines Films auf einem dieser Gegenstände aufträgt und ihn vor oder nach dem Trocknen des Films mit einem anderen Gegenstand zusammenfügt.

Gegenstände aus Textil, Leder oder Papier lassen sich mit den erfindungsgemäßen Dispersionen imprägnieren, indem man diese Gegenstände mit der wässerigen Dispersion tränkt und anschließend trocknet.

Die erfindungsgemäßen wässrigen Dispersionen sind unter Verwendung nicht toxischer Katalysatoren erhältlich, wodurch sich das ebenfalls erfindungsgemäße Herstellungsverfahren leichter durchführen läßt. Die erfindungsgemäßen wässrigen Dispersionen zeichnen sich ferner u.a. dadurch aus, daß sie ein Polyurethan enthalten, welches keine unerwünschten Verzweigungen der Polymerkette aufweist, da die erfindungsgemäß eingesetzten Cäsiumsalze keine Nebenreaktionen, welche zur Bildung von unerwünschten Allophanat-, Isocyanurat-, oder Carbodiimidgruppen führen, katalysieren. Die erfindungsgemäßen wässrigen Dispersionen eignen sich insbesondere zur Beschichtung von Textilien oder Leder.

### Experimentelle Teil

### Beispiel

800,0 g (0,40 mol) eines Polyesterdiols aus Adipinsäure, Neopentylglykol und Hexandiol-1,6 der OH-Zahl 56, 34,0 g (0,0099 mol) eines Butanol-gestarteten Polyethylenoxids der OH-Zahl 15 und 0,58 g einer Lösung von 1 g Cäsium-Acetat in 9 g Butandiol-1,4 wurden in einem Rührkolben vorgelegt und auf 70°C gebracht. Dazu wurden 85,8 g (0,3248 mol) HMDI und 70,8 g (0,3185 mol) IPDI gegeben und 135 min bei 100°C gerührt. Hernach wurde mit 1160 g Aceton verdünnt, auf 50°C gekühlt und der NCO-Gehalt zu 0,99 Gew.-% bestimmt (berechnet: 0,91 Ges.-%). 10 min nach der Zugabe von 44,6 g einer 50%igen wäßrigen Lösung des Natriumsalzes der 2-Aminoethyl-2-aminoethansulfonsäure wurde mit 1200 g Wasser dispergiert und dann mit 7,8 g DETA und 3,6 g IPDA in 100 g Wasser kettenverlängert. Nach Destillation des Acetons erhielt man eine feinteilige Dispersion mit ca. 40 % Festgehalt.

### Vergleichsbeispiel

Das Beispiel wurde wiederholt, jedoch ohne Zugabe der Cäsium-Acetat-Lösung. Nach 260 min Rühren bei 100°C wurde ein NCO-Gehalt von 1,15 Gew.-% bestimmt. 10 min nach der Zugabe von 44,6 g einer 50 %igen wässrigen Lösung des Natriumsalzes der 2-Aminoethyl-2-aminoethansulfonsäure wurde mit 1200 g Wasser dispergiert und dann mit 7,8 g DETA und 3,6 g IPDA in 100 g Wasser kettenverlängert. Nach Destillation des Acetons erhielt man eine feinteilige Dispersion mit ca. 40 % Festgehalt.

### Abkürzungen:

- HMDI: Di(isocyanatocyclohexyl)methan
- IPDI: Isophorondiisocyanat
- DETA: Diethylentriamin
- IPDA: Isophorondiiamin

## Patentansprüche

1. Wässrige Dispersionen, enthaltend ein Polyurethan, aufgebaut aus
a₎ Diisocyanaten,
b₎ Diolen, von denen
b₁₎ 10 bis 100 mol-%, bezogen auf die Gesamtmenge der Diole (b), ein Molekulargewicht von 500 bis 5000 aufweisen, und
b₂₎ 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt,
erhältlich durch Umsetzung der Monomere a, b, c, sowie gegebenenfalls d, und e, in Anwesenheit eines Cäsiumsalzes.

2. Wässrige Dispersionen nach Anspruch 1, wobei als Diisocyanate (a) 1-Isocyanato-3,5,5-trimethyl-5-isocyanatomethylcyclohexan (IPDI), Tetramethylxylylendiisocyanat (TMXDI), Hexamethylendiisocyanat (HDI) sowie Bis-(4-isocyanatocyclohexyl)methan (HMDI) verwendet werden.

3. Wässrige Dispersionen nach den Ansprüchen 1 oder 2, wobei es sich bei den Diolen (b₁) um Polyesterdiole, erhalten durch Umsetzung von zweiwertigen Alkoholen mit zweiwertigen Carbonsäuren oder durch Anlagerung von Lactonen an geeignete difunktionelle Startermoleküle, oder um Polyetherdiole oder Gemische daraus handelt.

4. Wässrige Dispersionen nach den Ansprüchen 1 bis 3, wobei als Diole (b₂) Diole mit 2 bis 12 C-Atomen eingesetzt werden.

5. Wässrige Dispersionen nach den Ansprüchen 1 bis 4, wobei als Monomere (c) die N-(2-Aminoethyl)-2-aminoethansulfonsäure oder die N-(2-Aminoethyl)-2-aminoethancarbonsäure sowie deren entsprechende Alkalisalze verwendet werden.

6. Wässrige Dispersionen nach den Ansprüchen 1 bis 5, wobei die Umsetzung der Monomere a₎, b₎, c₎ sowie gegebenenfalls d₎ und e, bei Temperaturen von 20 bis 180°C und mittleren Reaktionszeiten von 1 bis 20 Stunden erfolgt.

7. Wässrige Dispersionen nach den Ansprüchen 1 bis 6, wobei die Umsetzung der Monomere a₎, b₎, c₎ sowie gegebenenfalls d₎ und e₎ in Anwesenheit eines Cäsiumcarboxylats erfolgt.

8. Verfahren zur Herstellung von wässrigen Dispersionen, enthaltend ein Polyurethan, aufgebaut aus
a₎ Diisocyanaten,
b₎ Diolen, von denen
b₁₎ 10 bis 100 mol-%, bezogen auf die Gesamtmenge der Diole (b), ein Molekulargewicht von 500 bis 5000 aufweisen, und
b₂₎ 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven. Gruppe, bei der es sich um eine alkoholische Hydroxylgruppe, eine primäre oder sekundäre Aminogruppe oder eine Isocyanatgruppe handelt,
**dadurch gekennzeichnet, daß** die Umsetzung der Monomere a₎, b₎, c₎, sowie gegebenenfalls d₎ und e, in Abwesenheit eines Cäsiumsalzes erfolgt.

9. Verfahren zur Beschichtung von Gegenständen aus Metall, Kunststoff, Papier, Textil, Leder oder Holz, **dadurch gekennzeichnet, daß** man eine wässerige Dispersion nach den Ansprüchen 1 bis 7 in Form eines Films auf diese Gegenstände aufträgt und die Dispersion trocknet.

10. Verfahren zur Verklebung von Gegenständen aus Metall, Kunststoff, Papier, Textil, Leder oder Holz, **dadurch gekennzeichnet, daß** man eine wässerige Dispersion nach den Ansprüchen 1 bis 7 in Form eines Films auf einem dieser Gegenstände aufträgt und ihn vor oder nach dem Trocknen des Films mit einem anderen Gegenstand zusammenfügt.

11. Verfahren zur Imprägnierung von Gegenständen aus Textil, Leder oder Papier, **dadurch gekennzeichnet, daß** man diese Gegenstände mit der wässerigen Dispersion nach den Ansprüchen 1 bis 7 tränkt und anschließend trocknet.

12. Gegenstände, die mit der wässerigen Dispersion nach den Ansprüchen 1 bis 7 geschichtet, verklebt oder imprägniert sind.

13. Verwendung der wäßrigen Dispersionen gemäß den Ansprüchen 1 bis 7 als hydrolysefeste Beschichtung für Gegenstände aus Metall, Kunststoff, Papier, Textil, Leder oder Holz.

## Claims

1. An aqueous dispersion comprising a polyurethane composed of
a) diisocyanates,
b) diols of which
b₁) from 10 to 100 mol%, based on the total amount of diols (b), have a molecular weight of from 500 to 5000, and
b₂) from 0 to 90 mmol%, based on the total amount of diols (b), have a molecular weight of from 60 to 500 g/mol,
c) monomers other than the monomers (a) and (b), containing at least one isocyanate group or at least one isocyanate- reactive group and further carrying at least one hydrophilic group or potentially hydrophilic group by means of which the polyurethane is made dispersible in water,
d) optionally further, polyfunctional compounds other than the monomers (a) to (c), containing reactive groups which are alcoholic hydroxyl groups, primary or secondary amino groups or isocyanate groups, and
e) optionally monofunctional compounds which are other than the monomers (a) to (d) and contain a reactive group which is an alcoholic hydroxyl group, a primary or secondary amino group or an isocyanate group,
obtainable by reacting the monomers a), b), c), and, optionally, d) and e) in, the presence of a cesium salt.

2. The aqueous dispersion according to claim 1, wherein diisocyanates (a) comprise 1-isocyanato-3,5,5-trimethyl- 5-isocyanatomethylcyclohexane (IPDI), tetramethylxylylene diisocyanate (TMXDI), hexamethylene diisocyanate (HDI), and bis(4-isocyanatocyclohexyl)methane (HMDI).

3. The aqueous dispersion according to claim 1 or 2, wherein the diols (b₁) comprise polyesterdiols, obtained by reacting dihydric alcohols with dibasic carboxylic acids or by subjecting lactones to addition with suitable difunctional starter molecules, or comprise polyetherdiols or mixtures thereof.

4. The aqueous dispersion according to any of claims 1 to 3, wherein diols (b₂) comprise diols having from 2 to 12 carbon atoms.

5. The aqueous dispersion according to any of claims 1 to 4, wherein monomers (c) comprise N-(2-aminoethyl)-2-aminoethane-sulfonic acid or N-(2-aminoethyl)-2-aminoethanecarboxylic acid and the corresponding alkali metal salts thereof.

6. The aqueous dispersion according to any of claims 1 to 5, wherein monomers a), b), c), and, optionally, d) and e) are reacted at temperatures from 20 to 180°C for average times from 1 to 20 hours.

7. The aqueous dispersion according to any of claims 1 to 6, wherein monomers a), b), c), and, optionally, d) and e) are reacted in the presence of a cesium carboxylate.

8. A process for preparing an aqueous dispersion comprising a polyurethane composed of
a) diisocyanates,
b) diols of which
b₁) from 10 to 100 mol%, based on the total amount of diols (b), have a molecular weight of from 500 to 5000, and
b₂) from 0 to 90 mol%, based on the total amount of diols (b), have a molecular weight of from 60 to 500 g/mol,
c) monomers other than the monomers (a) and (b), containing at least one isocyanate group or at least one isocyanate- reactive group and further carrying at least one hydrophilic group or potentially hydrophilic group by means of which the polyurethane is made dispersible in water,
d) optionally further, polyfunctional compounds other than the monomers (a) to (c), containing reactive groups which are alcoholic hydroxyl groups, primary or secondary amino groups or isocyanate groups, and
e) optionally monofunctional compounds which are other than the monomers (a) to (d) and contain a reactive group which is an alcoholic hydroxyl group, a primary or secondary amino group or an isocyanate group,
which comprises reacting the monomers a), b), c), and, optionally, d) and e) in the presence of a cesium salt.

9. A method of coating an article of metal, plastic, paper, textile, leather or wood, which comprises applying to said article an aqueous dispersion according to any of claims 1 to 7 in the form of a film and drying the dispersion.

10. A method of adhesively bonding an article of metal, plastic, paper, textile, leather or wood, which comprises applying to said article an aqueous dispersion according to any of claims 1 to 7 in the form of a film and joining said article to another article before or after drying the film.

11. A method of impregnating an article of textile, leather or paper, which comprises soaking said article with an aqueous dispersion according to any of claims 1 to 7 and then drying it.

12. An article coated, adhesively bonded or impregnated with an aqueous dispersion according to any of claims 1 to 7.

13. The use of an aqueous dispersion according to any of claims 1 to 7 as a hydrolysis-resistant coating for an article made of metal, plastic, paper, textile, leather or wood.

## Revendications

1. Dispersions aqueuses, contenant un polyuréthane synthétisé à partir
a) de diisocyanates,
b) de diols, dont
b₁) 10 à 100 % en moles, par rapport à la quantité totale des diols (b), présentent une masse moléculaire de 500 à 5 000 g/mol, et
b₂) 0 à 90 % en moles, par rapport à la quantité totale des diols (b), présentent une masse moléculaire de 60 à 500 g/mol,
c) de monomères différents des monomères (a) et (b), comportant au moins un groupe isocyanate ou au moins un groupe réactif vis-à-vis de groupes isocyanate, qui en outre portent au moins un groupe hydrophile ou un groupe potentiellement hydrophile, par lequel est réalisée la dispersibilité dans l'eau des polyuréthanes,
d) éventuellement d'autres composés plurivalents, différents des monomères (a) à (c), comportant des groupes réactifs qui consistent en des groupes hydroxy alcooliques, des groupes amino primaires ou secondaires ou des groupes isocyanate et
e) éventuellement des composés monovalents différents des monomères (a) à (d), comportant un groupe réactif qui consiste en un groupe hydroxy alcoolique, un groupe amino primaire ou secondaire ou un groupe isocyanate,
pouvant être obtenu par mise en réaction des monomères (a), (b), (c), ainsi qu'éventuellement (d) et (e), en présence d'un sel de césium.

2. Dispersions aqueuses selon la revendication 1, dans lesquelles ont utilise en tant que diisocyanates (a) le 1-isocyanato-3,5,5-triméthyl-5-isocyanatométhyl-cyclohexane (IPDI), le tétraméthylxylylène-diisocyanate (TMXDI), l'hexaméthylène-diisocyanate (HDI) ainsi que le bis-(4-isocyanatocyclohexyl)méthane (HMDI).

3. Dispersions aqueuses selon la revendication 1 ou 2, dans lesquelles les diols (b₁) consistent en des polyesterdiols, obtenus par mise en réaction d'alcools dihydriques avec des acides dicarboxyliques ou par fixation par addition de lactones sur des molécules de départ difonctionnelles appropriées, ou en des polyétherdiols ou des mélanges de ceux-ci.

4. Dispersions aqueuses selon les revendications 1 à 3, dans lesquelles on utilise en tant que diols (b₂) des diols ayant de 2 à 12 atomes de carbone.

5. Dispersions aqueuses selon les revendications 1 à 4, dans lesquelles on utilise en tant que monomères (c) l'acide N-(2-aminoéthyl)-2-aminoéthanesulfonique ou l'acide N-(2-aminoéthyl)-2-aminoéthanecarboxylique ainsi que leurs sels alcalins correspondants.

6. Dispersions aqueuses selon les revendications 1 à 5, dans lesquelles la réaction des monomères (a), (b), (c) ainsi qu'éventuellement (d) et (e) s'effectue à des températures de 20 à 180 °C, et pendant des temps de réaction moyens de 1 à 20 heures.

7. Dispersions aqueuses selon les revendications 1 à 6, dans lesquelles la réaction des monomères (a), (b), (c) ainsi qu'éventuellement (d) et (e) s'effectue en présence d'un carboxylate de césium.

8. Procédé pour la préparation de dispersions aqueuses contenant un polyuréthane synthétisé à partir
a) de diisocyanates,
b) de diols, dont
b₁) 10 à 100 % en moles, par rapport à la quantité totale des diols (b), présentent une masse moléculaire de 500 à 5 000 g/mol, et
b₂) 0 à 90 % en moles, par rapport à la quantité totale des diols (b), présentent une masse moléculaire de 60 à 500 g/mol,
c) de monomères différents des monomères (a) et (b), comportant au moins un groupe isocyanate ou au moins un groupe réactif vis-à-vis de groupes isocyanate, qui en outre portent au moins un groupe hydrophile ou un groupe potentiellement hydrophile, par lequel est réalisée la dispersibilité dans l'eau des polyuréthanes,
d) éventuellement d'autres composés plurivalents, différents des monomères (a) à (c), comportant des groupes réactifs qui consistent en des groupes hydroxy alcooliques, des groupes amino primaires ou secondaires ou des groupes isocyanate et
e) éventuellement des composés monovalents différents des monomères (a) à (d), comportant un groupe réactif qui consiste en un groupe hydroxy alcoolique, un groupe amino primaire ou secondaire ou un groupe isocyanate,
**caractérisé en ce que** la réaction des monomères (a), (b), (c) ainsi qu'éventuellement (d) et (e) s'effectue en présence d'un sel de césium.

9. Procédé pour la revêtement d'articles en métal, matière plastique, papier, textile, cuir ou bois, **caractérisé en ce qu'**on applique sur ces articles une dispersion aqueuse selon les revendications 1 à 7 sous forme d'un film et on sèche la dispersion.

10. Procédé pour le collage d'articles en métal, matière plastique, papier, textile, cuir ou bois, **caractérisé en ce qu'**on applique sur l'un de ces articles une dispersion aqueuse selon les revendications 1 à 7 sous forme d'un film, et, avant ou après le séchage du film, on le réunit avec l'autre article.

11. Procédé pour l'imprégnation d'articles en textile, cuir ou papier, **caractérisé en ce qu'**on imbibe ces articles avec la dispersion aqueuse selon les revendications 1 à 7 et ensuite on les sèche.

12. Articles qui sont revêtus, collés ou imprégnés avec la dispersion aqueuse selon les revendications 1 à 7.

13. Utilisation des dispersions aqueuses selon les revendications 1 à 7, en tant que revêtement résistant à l'hydrolyse pour des articles en métal, matière plastique, papier, textile, cuir ou bois.
